# EUROPÄISCHE PATENTSCHRIFT

(11) **EP 2 638 254 B1**
(45) Veröffentlichungstag und Bekanntmachung des Hinweises auf die Patenterteilung: **08.02.2017**
(21) Anmeldenummer: 11779712.6
(22) Anmeldetag: 11.11.2011
(51) Int. Cl.: F01K 23/14, F02G 1/02, F22B 1/18, B62D 37/02, F01K 23/06

(54) **FAHRZEUG, INSBESONDERE RENNFAHRZEUG**
VEHICLE, ESPECIALLY RACING VEHICLE
VÉHICULE, NOTAMMENT VÉHICULE DE COURSE

(30) Priorität: 11.11.2010 AT 18572010
(43) Veröffentlichungstag der Anmeldung: 18.09.2013
(73) Patentinhaber: AVL List GmbH, 8020 Graz (AT)
(72) Erfinder: SCHOEGGL, Peter, A-8151 Hitzendorf (AT)
(74) Vertreter: Babeluk, Michael
(86) Internationale Anmeldenummer: PCT/EP2011/069917
(87) Internationale Veröffentlichungsnummer: WO 2012/062899

(56) Entgegenhaltungen:
- WO-A2-2009/010023
- DE-A1- 2 554 953
- DE-A1- 4 015 104
- DE-A1-102010 003 537
- US-A- 3 554 849
- US-A- 5 806 332

## Beschreibung

Die Erfindung betrifft ein Fahrzeug, insbesondere Rennfahrzeug, mit einer eine Brennkraftmaschine aufweisenden Antriebseinheit, und zumindest einer eine abtriebserhöhende Einrichtung aufweisenden um- oder durchströmten Einrichtung.

Bei Renn- und Sportfahrzeuge werden Beschleunigungen, Verzögerungen und Kurvenbeschleunigungen erzielt, die den Wert von 1 g (= Erdbeschleunigung) erheblich überschreiten. Solche Werte sind nur möglich, wenn die Haftungsgrenzen zwischen den Reifen und der Fahrbahnoberfläche mit aerodynamischen Hilfsmitteln heraufgesetzt werden. Am Fahrzeugkörper wird starker Abtrieb erzeugt. Diesem Zweck dienen Frontflügel, Heckflügel und eine besondere Formgebung des eigentlichen Fahrzeugkörpers. Eine dominierende Rolle spielt dabei die Gestaltung des Fahrzeugunterbodens. Es wird angestrebt, die unter dem Fahrzeugboden strömende Luft so stark wie nur möglich zu beschleunigen. Je höher deren Geschwindigkeit, desto stärker ist nach dem Bernoullischen Gesetz deren Saugkraft und desto stärker ist der auf den Fahrzeugunterboden ausgeübte Abtrieb. Um eine möglichst starke Beschleunigung der Unterbodenluft zu erreichen, wird bei heutigen Rennfahrzeugen die kinetische Energie der Abgase herangezogen: Der Unterboden wird am Heck des Fahrzeugs nach oben gebogen und meist mit senkrechten aerodynamischen Luftleitblechen zur Seite hin abgeschirmt und eventuell noch in der Mitte unterteilt. Auf diese Weise entsteht für die Luft, die unter dem Fahrzeug entlang strömt, ein Diffusor. In diese Diffusorzone werden die Enden der Auspuffrohre mit waagrechten nach hinten zielender Strahlrichtung eingeleitet. Die mit hoher Geschwindigkeit austretenden Abgase üben auf die Luft unter dem Unterboden eine Saugwirkung aus. Sie erhöhen deren Geschwindigkeit und damit deren Saugwirkung auf den Unterboden und somit den Abtrieb des Fahrzeugs.

Die DE 2 554 953 A1 beschreibt eine Antriebseinheit für ein eine Brennkraftmaschine aufweisendes Fahrzeug mit einer Einrichtung zur Rückgewinnung von Wärme aus dem Abgasstrang, wobei ein Teil des Auslasssystems von einem Mantelraum umgeben ist, dessen Eintrittsbereich mit einem Verdichter und dessen Austrittsbereich mit einer Heißluftturbine strömungsverbunden ist. Der Verdichter ist mit der Kurbelwelle der Brennkraftmaschine antriebsverbunden. Die Heißluftturbine steht über ein Getriebe und eine Überholkupplung mit dem Differential des Fahrzeuges in mechanischer Verbindung. Nachteilig ist, dass zum Antrieb des Verdichters mechanische Leistung von der Kurbelwelle aufgebracht werden muss.

Die DE 40 15 104 A1 beschreibt eine kombinierte Wärmekraftanlage mit teils hintereinander geschalteten Wärmekraftmaschinen, die ihre nutzbare Wärme auf eine der jeweils kombinierten anderen Kraftmaschinen übertragen. Dabei liefert die vorgeschaltete Wärmekraftmaschine als Verbrennungskraftmaschine Heißdruckgas für die folgende Kraftmaschine. Das Abgas der mittleren Wärmekraftmaschine überträgt die Einsatzwärme der nachgeschalteten Dampfkraftanlage. Der vorgeschalteten Wärmekraftmaschine ist ein Verdichter zugeordnet, wobei beide eine Kraftmaschineneinheit bilden und mit einer zugehörigen Heißdruckgasleitung, dem Heißgasmotor oder der Heißgasturbine sowie der nachgeschalteten Niederdruck-Gasleitung mit dem Überhitzer/Verdampfer der zugehörigen Dampfkraftanlage die kombinierte Wärmekraftanlage darstellen.

Die Veröffentlichung US 3 554 849 A offenbart ein Fahrzeug mit einer Brennkraftmaschine und einem thermomechanischen Transducer um Wärme der Brennkraftmaschine in mechanische Antriebsenergie zu wandeln. Der thermomechanische Transducer weist eine Kaltdampfmaschine mit einem Hochdruckeingang zum Anschluss an einen Wärmetauscher, einen Kondensator mit einem Niederdruckeingang und einem Flüssigausgang, einem Niederdruckausgang zum Anschluss an den Niederdruckeingang des Kondensators und Leitungen, die den Flüssigkeitsausgang des Kondensators mit dem Flüssigkeitseingang des Wärmetauschers verbinden, auf. Der Kreislauf weist weiters eine Pumpe auf, welche Flüssigkeit vom Kondensator zum Wärmetauscher fördert. Der Wärmetauscher steht mit einem Schmierölsystem in thermischer Verbindung, um das Schmiermittel der Brennkraftmaschine zu kühlen.

Die US 5 806 332 A offenbart ein Fahrzeug mit einer Brennkraftmaschine und einem System zur Rückgewinnung von Energie aus dem Abgassystem, wobei Abgaswärme über einen Wärmetauscher an ein in einem geschlossen Kreislauf zirkulierendes Arbeitsmedium übertragen wird. Im Kreislauf ist ein Expander angeordnet, welcher einen elektrischen Generator antreibt.

Aufgabe der Erfindung ist es, auf möglicht einfache Weise die Strömungseigenschaften des Fahrzeuges zu verbessern. Insbesondere soll der Strömungswiderstand und die Straßenlage des Fahrzeuges verbessert werden.

Erfindungsgemäß wird dies erreicht durch die Merkmale des Anspruchs 1. Dabei ist vorgesehen, dass die zumindest eine um- oder durchströmte Einrichtung im Ansaugströmungsweg und/oder Austrittsströmungsweg eines vorzugsweise durch eine erste Turbine antreibbaren ersten Verdichters angeordnet ist, und dass zumindest eine Austrittsöffnung des Austrittsströmungsweges des ersten Verdichters und/oder der ersten Turbine im Bereich der abtriebserhöhenden Einrichtung des Fahrzeuges so angeordnet ist, dass die Wirkung der abtriebserhöhenden Einrichtung gesteigert werden kann.

Unter Ansaugströmungsweg ist hier der - insbesondere leitungsgeführte - saugseitige Strömungsweg stromauf des ersten Verdichters und mit Austrittsströmungsweg der - insebesondere leitungsgeführte - druckseitige Strömungsweg stromab des ersten Verdichters zu verstehen.

Der durch die erste Turbine angetriebene erste Verdichter fördert Luft, wobei es besonders vorteilhaft ist, wenn im Strömungsweg zum ersten Verdichter, vorzugsweise stromaufwärts einer Ansaugöffnung des ersten Verdichters, zumindest ein Kühler, vorzugsweise ein Luft-/Wasserkühler und/oder ein Luft-/Ölkühler, angeordnet ist. Die Ansaugöffnung des ersten Verdichters ist bevorzugt im Bereich der Kühlflächen des Luft-/Wasserkühlers bzw. Luft-/Ölkühlers so angeordnet, dass der Verdichter Luft durch die Kühlflächen ansaugt. Dadurch, dass der Verdichter die zu verdichtende Luft durch die Kühlflächen des Luft-/Wasserkühlers oder des Luft-/Ölkühlers ansaugt, können die Kühlflächen auf Grund der höheren Strömungsgeschwindigkeiten wesentlich verringert werden. Dies ermöglicht eine besonders kompakte Ausführung der Kühleinrichtungen und reduziert die Strömungsverluste. Gegebenenfalls kann durch Einsatz des ersten Verdichters auf einen Kühlerventilator verzichtet oder dieser zumindest wesentlich kleiner dimensioniert werden. Dies wirkt sich äußerst vorteilhaft auf den Raumbedarf, das Gewicht und den Energiehaushalt des Fahrzeuges aus.

Bei Fahrzeugen mit aerodynamischen abtriebserhöhenden Einrichtungen, insbesondere bei Rennfahrzeugen, ist es von besonderem Vorteil, wenn die abtriebserhöhende Einrichtung im druckseitigen Strömungsweg des ersten Verdichters so angeordnet ist, dass die verdichtete Luft auf die abtriebserhöhende Einrichtung geleitet wird. Dadurch kann der Abtrieb wesentlich erhöht werden. Die abtriebserhöhende Einrichtung kann dabei durch einen Heckflügel gebildet sein, wobei vorzugsweise zumindest eine Austrittsöffnung aus dem druckseitigen Strömungsweg des ersten Verdichters eines von der ersten Turbine kommenden Austrittsströmungsweges im Bereich unterhalb der der Fahrbahn zugewandten Unterseite des Heckflügels, besonders vorzugsweise im Bereich der Vorderkante des Heckflügels angeordnet ist. Die abtriebserhöhende Einrichtung kann auch durch einen vorzugsweise durch einen Fahrzeugunterboden des Fahrzeuges gebildeten Diffusor im Heckbereich des Fahrzeuges gebildet sein, wobei zumindest eine Austrittsöffnung aus dem druckseitigen Strömungsweg des ersten Verdichters und/oder eines von der ersten Turbine kommenden Austrittsströmungsweges im Bereich des Diffusors angeordnet ist. Insbesondere kann dabei die Austrittsöffnung im Bereich eines Staupunktes an der der Fahrbahn zugewandten Seite des Diffusors angeordnet oder auf der der Fahrbahn zugewandten Seite des Diffusors angeordnet sein, wobei vorzugsweise die Austrittsöffnung in einem Anfangsbereich des Diffusors angeordnet ist.

In einer einfachen Ausführungsform der Erfindung ist die erste Turbine durch eine im Auslasssystem der Brennkraftmaschine angeordnete Abgasturbine gebildet.

In einer äußerst effizienten Ausführungsvariante der Erfindung weist die Antriebseinheit eine Vorrichtung zur Rückgewinnung von Wärme aus einem wärmeabgebenden Bauteil oder einer Wärme abgebenden Baugruppe auf, wobei der Bauteil oder die Baugruppe an zumindest einen luftdurchströmten Raum grenzt, vorzugsweise zumindest teilweise von dem luftdurchströmten Raum umgeben ist. Der Wärme abgebenden Bauteil oder die Wärme abgebenden Baugruppe kann dabei beispielsweise durch das Auslasssystem der Brennkraftmaschine gebildet sein. Die Wärme des Auslasssystems kann besonders effektiv genutzt werden, wenn das Auslasssystem zumindest einen von mindestens einem luftdurchströmten Raum umgebenen Abgaskrümmer und/oder zumindest einen von mindestens einem luftdurchströmten Raum umgebenen Abgaskanal im Zylinderkopf der Brennkraftmaschine aufweist. Es ist aber auch möglich, dass der luftdurchströmte Raum Teil eines Wärmetauschers ist. Zumindest ein Eintrittsbereich des luftdurchströmten Raumes ist mit der Druckseite des ersten Verdichters strömungsverbunden. In dieser Ausführung ist die erste Turbine bevorzugt durch eine Heißluftturbine gebildet, wobei zumindest ein Austrittsbereich des luftdurchströmten Raumes mit der Heißluftturbine strömungsverbunden ist. Die erste Turbine ist somit im druckseitigen Strömungsweg des ersten Verdichters stromabwärts des luftdurchströmten Raumes angeordnet.

Besonders vorteilhaft ist es, wenn der erste Verdichter und/oder die erste Turbine, vorzugsweise über eine gemeinsame Welle, mit einer elektrischen Maschine antriebsverbunden ist. Die nach Antrieb des ersten Verdichters verbleibende restliche kinetische Energie der Heißluftturbine kann somit zur Erzeugung von elektrischer Energie genutzt werden. Weiters kann mittels der elektrischen Maschine das Laufzeug der ersten Turbine bzw. des ersten Verdichters besonders rasch auf Betriebsdrehzahl gebracht werden. Alternativ oder zusätzlich kann auch vorgesehen sein, dass die erste Turbine mit dem Antriebsstrang des Fahrzeuges mechanisch verbunden ist, wobei vorzugsweise die erste Turbine parallel zur Brennkraftmaschine und/oder parallel zu einer elektrischen Antriebsmaschine angeordnet sein kann.

Sowohl die Heißluftturbine, als auch der erste Verdichter, werden im Wesentlichen nur von Luft - und nicht hauptsächlich etwa von Abgas - durchströmt. Somit ist in den meisten Fällen keine Strömungsverbindung zwischen Abgasströmungsweg und luftdurchströmtem Raum erforderlich.

Abhängig von der Konfiguration kann es aber auch durchaus vorteilhaft sein, wenn zwischen dem Auslasssystem und dem Raum zumindest eine vorzugsweise über ein Ventil steuerbare Strömungsverbindung, beispielsweise stromaufwärts einer im Auslasssystem der Brennkraftmaschine vorgesehenen zweiten Turbine - einer Abgasturbine eines Abgasturboladers - angeordnet ist. Das steuerbare Ventil kann dabei etwa das Wastegate des Abgasturboladers ersetzen und zum Beispiel in Abhängigkeit des Ladedruckes betätigt werden. Somit kann über das Ventil in den luftdurchströmten Raum abgeblasenes Abgas noch zusätzlich zum Antrieb der Heißluftturbine genutzt werden.

Dadurch, dass der erste Verdichter direkt durch die Heißluftturbine angetrieben wird, ist keine zusätzliche Antriebsenergie für die Verdichtung der Luft erforderlich, welche durch den vorzugsweise als Mantelraum ausgebildeten Raum des Wärme abgebenden Bauteils strömt.

Eine besonders effektive Nutzung der Wärmeenergie des Auslasssystems kann erfolgen, wenn die erste Turbine mehrflutig ausgebildet ist, wobei vorzugsweise zumindest zwei Fluten nacheinander durchströmbar sein können.

Der aus der ersten Turbine austretende Luftstrom ist vorteilhafter Weise auf die abtriebserhöhende Einrichtung gerichtet. Somit kann der aus der Heißluftturbine ausströmende Volumenstrom genutzt werden, um zusätzlichen Abtrieb zu erzeugen. Die Austrittsöffnungen sind dabei so angeordnet, dass der entstehende Überdruck den Wirkungsgrad von aerodynamischen Bauteilen erhöht.

Die Erfindung wird im Folgenden anhand der Figuren näher erläutert: Es zeigen schematisch:
- Fig. 1: eine Antriebseinheit eines erfindungsgemäßen Fahrzeuges in einer ersten Ausführungsvariante;
- Fig. 1a: das Detail Ia aus Fig. 1;
- Fig. 2: bis Fig. 5 verschiedene Ausführungsvarianten von Antriebseinheiten von erfindungsgemäßen Fahrzeugen;
- Fig. 6: bis Fig. 9 verschiedenen Varianten für die Anordnung der Austrittsöffnung des Verdichters;
- Fig. 10: eine Antriebseinheit mit parallelen Antriebsmaschinen; und
- Fig. 11: eine weitere Variante einer Antriebseinheit mit parallel geschalteten Antriebsmaschinen.

Funktionsgleiche Teile sind mit gleichen Bezugszeichen versehen.

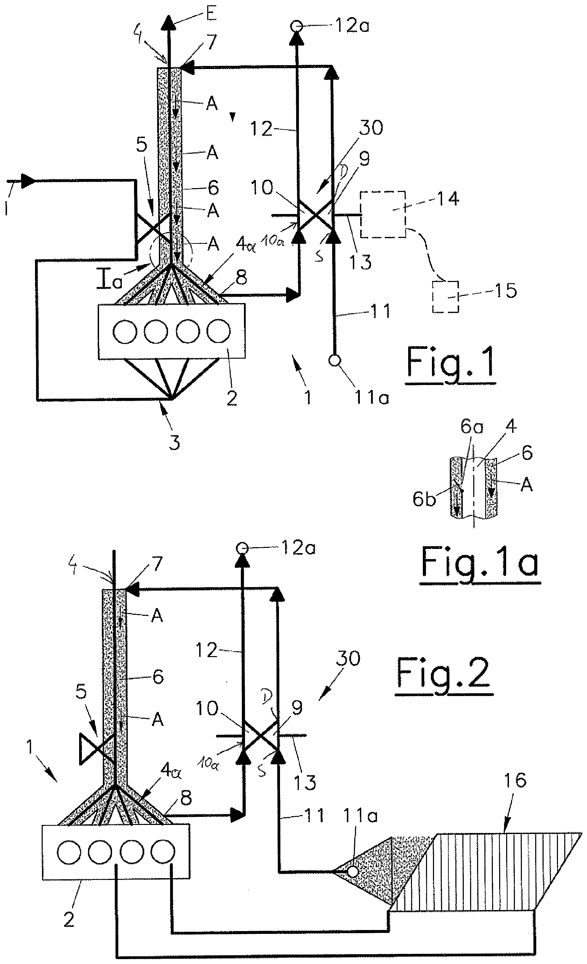

Die in Fig. 1 dargestellte Antriebseinheit 1 weist eine Brennkraftmaschine 2 mit einem Einlasssystem 3 und einem Auslasssystem 4 auf. Mit E ist die Abgasströmung und mit T die Einlassströmung angedeutet. Es ist eine Vorrichtung 30 zur Rückgewinnung der Wärmeenergie aus dem Abgas vorgesehen. Das Auslasssystem 4 ist dabei zumindest teilweise mit einem durch einen Mantelraum gebildeten luftdurchströmten Raum 6 umgeben, welcher bezüglich der Abgasströmung nach dem Gleich- oder Gegenstromprinzip von verdichteter Luft entsprechend den Pfeilen A durchströmt wird. Der Raum 6 weist einen Einlassbereich 7 und einen Auslassbereich 8 auf, wobei der Einlassbereich 7 mit einem ersten Verdichter 9 und der Austrittsbereich 8 mit einer durch eine Heißluftturbine 10a gebildeten ersten Turbine 10 strömungsverbunden ist. Die Saugseite des ersten Verdichters 9 ist mit S und die Druckseite des ersten Verdichters 9 mit D bezeichnet. Die Heißluftturbine 10a ist dabei wellengleich mit dem ersten Verdichter 9 angeordnet und treibt somit den ersten Verdichter 9 über die Welle 13 an. Der Ansaugströmungsweg in den ersten Verdichter 9 ist mit Bezugszeichen 11, der stromab des ersten Verdichters 9 angeordnete Austrittsströmungsweg aus der Heißluftturbine 10a beziehungsweise aus dem ersten Verdichter 9 ist mit Bezugszeichen 12 bezeichnet. Im Ein- und Auslasssystem 3, 4 kann ein Abgasturbolader 5 angeordnet sein, welcher eine zweite Turbine 5a (Abgasturbine) im Auslasssystem 4 und einen zweiten Verdichter 5b im Einlasssystem 3 aufweist.

Über den Ansaugströmungsweg 11 wird durch den ersten Verdichter 9 Umgebungsluft angesaugt und verdichtet. Die verdichtete Luft gelangt über den Eintrittsbereich 7 in den Raum 6 und umströmt den ummantelten Bereich des Auslasssystems 4, zum Beispiel nicht weiter dargestellte Abgasnachbehandlungseinrichtungen, die Abgasturbine 5a des Abgasturboladers 5, sowie die Krümmer-Anordnung 4a des Auslasssystems 4 im Gegenstromprinzip. Die erhitzte Luft verlässt den Raum 6 im Austrittsbereich 8 und gelangt zur Heißluftturbine 10a, wobei unter Arbeitsverrichtung eine Entspannung der verdichteten Luft eintritt. Die Heißluftturbine 10a treibt dabei den ersten Verdichter 9 an. Über den Austrittsströmungsweg 12 wird die entspannte Luft zumindest einer Austrittsöffnung 12a zugeführt.

Wie in Fig. 1 durch strichlierte Linien dargestellte ist, kann die Welle 13 des ersten Verdichters 9 und der Heißluftturbine 10a mit einer elektrischen Maschine 14, welche an einen elektrischen Speicher 15 angeschlossen ist, antriebsverbunden sein, wodurch ein Teil der Wärmeenergie zur Stromerzeugung verwendet werden kann. Weiters kann die elektrische Maschine 14 zum Hochfahren des ersten Verdichters 9 verwendet werden.

Fig. 1a zeigt ein Detail einer Ausführungsvariante der Erfindung, bei der das Abgassystem 4 und der luftdurchströmte Raum 6 durch eine Strömungsverbindung 6a miteinander verbunden sind, wobei in der Strömungsverbindung 6a ein Ventil 6b angeordnet ist, welches beispielsweise in Abhängigkeit des Ladedruckes steuerbar sein kann. Das steuerbare Ventil 6b kann dabei die Funktionen eines Wastegates 5c der Abgasturbine 5a des Abgasturboladers 5 übernehmen. Das Ventil 6b kann aber auch ein durch Differenzdruck betätigtes Rückschlagventil sein.

Neben der Stromerzeugung können erster Verdichter 9 und Heißluftturbine 10a auch zur Unterstützung der Kühlung von Kühlkreisläufen in Fahrzeug und/oder zur Generierung von zusätzlicher Abtriebskraft für das Fahrzeug eingesetzt werden, wie in den Fig. 2 bis Fig. 9 dargestellt ist.

In der in Fig. 2 gezeigten Ausführung ist die Ansaugöffnung 11a des ersten Verdichters 9 im Bereich eines Kühlers 16 (Wärmetauschers) einer Kühleinrichtung angeordnet, wobei die Ansaugöffnung 11a nahe der Kühlfläche des Kühlers 16 so positioniert ist, dass der erste Verdichter 9 Luft durch den Kühler 16 ansaugt. Dies ermöglicht es, die Kühlfläche des Kühlers 16 wesentlich zu reduzieren und somit eine kompakte Bauweise zu realisieren. Weiters ist es möglich den Kühlerlüfter des Kühlers 16, der beispielsweise ein Luft-/Wasserkühler bzw. Luft-/Öl-kühlers sein kann, kleiner zu dimensionieren oder eventuell ganz durch den ersten Verdichter 9 zu ersetzen.

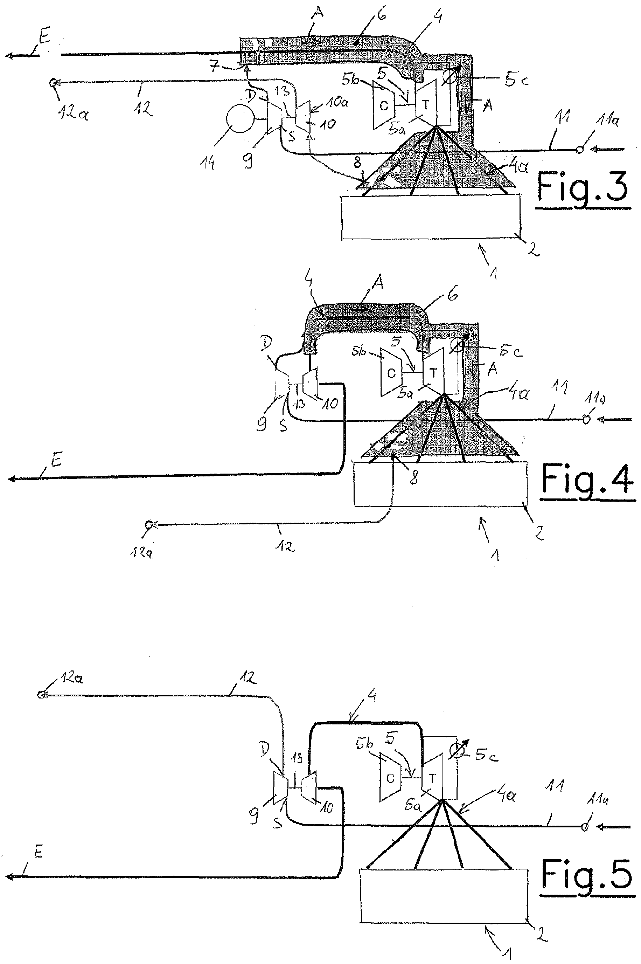

Die in Fig. 3 gezeigte Ausführung entspricht im Wesentlichen der Fig. 1, wobei in einer Umgehungsleitung der zweiten Turbine 5a ein Wastegate 5c vorgesehen ist. Die Ansaugöffnung 11a des Ansaugströmungsweges 11 des ersten Verdichters 9 kann - wie in Fig. 2 gezeigt - nahe der Kühlfläche des Kühlers 16 angeordnet sein, so dass die in den Ansaugströmungsweg 11 eintretende Luft vom ersten Verdichter 9 durch die Kühlfläche angesaugt wird.

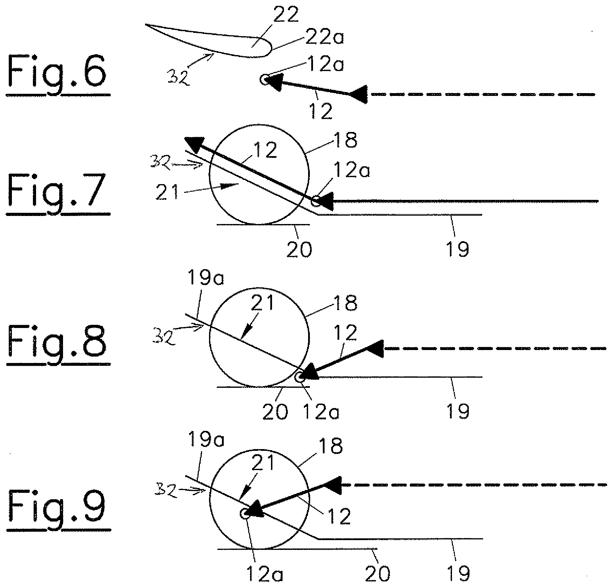

Alternativ oder zusätzlich kann die Austrittsöffnung 12a aus dem Austrittsströmungsweg 12 so angeordnet sein, dass die Wirkung einer abtriebserhöhenden Einrichtung 32 gesteigert werden kann, wie im Detail im Folgenden noch anhand der Fig. 6 bis Fig. 9 erläutert wird.

Fig. 4 zeigt eine Ausführung mit einer Antriebseinheit 1 für ein Fahrzeug, welche sich von den bisher beschriebenen Varianten dadurch unterscheidet, dass die erste Turbine 10 im Abgasstrang des Auslasssystems 4, im vorliegenden Beispiel stromabwärts der zweiten Turbine 5a, angeordnet ist. Die durch den Abgasstrom angetriebene erste Turbine 10 treibt über die gemeinsame Welle 13 den ersten Verdichter 9, welcher über die Ansaugöffnung 12a und den Ansaugströmungsweg 11 Luft ansaugt und über den Austrittsströmungsweg 12 und die Austrittsöffnung 12a verdichtete Luft austreten lässt. Wie bei den bisherigen Varianten gibt es auch hier die Möglichkeiten, die Luftströmung durch den ersten Verdichter 9 effizient zu nutzen, indem die Ansaugöffnung 11a des Ansaugströmungsweges 11 nahe der Kühlfläche des Kühlers 16 so angeordnet wird, dass Luft durch die Kühlfläche angesaugt wird, und/oder indem die Austrittsöffnung 12a aus dem Austrittsströmungsweg 12 im Bereich der abtriebserhöhenden Einrichtung 32 so angeordnet wird, dass der Abtrieb verbessert wird.

Fig. 5 zeigt eine weitere Ausführung einer Antriebseinheit 1 für ein Fahrzeug, bei der die erste Turbine 10 - wie in Fig. 4 - als Abgasturbine ausgebildet ist und vom Abgas im Abgasstrang des Auslasssystems 4 angetrieben wird. Die erste Turbine 10 treibt über die Welle 13 den ersten Verdichter 9, welcher Luft aus dem Ansaugströmungsweg 11 ansaugt und verdichtete Luft in den Austrittströmungsweg 12 fördert. Auch hier kann die Ansaugöffnung 11a des Ansaugströmungsweges 11 wieder Im Bereich der Kühlfläche des Kühlers 16 so angeordnet sein, dass Luft durch die Kühlfläche angesaugt wird, und/oder es kann die Austrittsöffnung 12a aus dem Austrittsströmungsweg 12 im Bereich der abtriebserhöhenden Einrichtung 32 so angeordnet sein, dass der Abtrieb verbessert wird, wie im Folgenden an Hand der Fig. 6 bis Fig. 9 beschrieben wird.

Die Fig. 6 bis Fig. 9 zeigen Ausführungsvarianten, bei denen durch eine definierte Anordnung der Austrittsöffnung 12a des ersten Verdichters 9 bzw. der ersten Turbine 10 im Bereich einer abtriebserhöhenden Einrichtung 32 eine Abtriebserhöhung des Fahrzeuges erreicht werden kann. Die abtriebserhöhende Einrichtung 32 kann dabei beispielsweise durch eine spezielle Form der Karosserie, des Fahrzeugbodens 19 und/oder durch aeodynamische Elemente wie zum Beispiel Heckflügel 22 gebildet sein. In den Fig. 6 bis Fig. 9 ist schematisch ein Fahrzeug, beispielsweise ein Rennfahrzeug, angedeutet. Mit Bezugszeichen 18 sind die Hinterräder des Fahrzeuges bezeichnet. Der in weiten Bereichen parallel zur Fahrbahn 20 ausgebildete Fahrzeugunterboden 19 weist im Bereich der Hinterräder 18 einen ansteigenden Bereich 19a auf, welcher einen sogenannten Diffusor 21 ausbildet. Dadurch, dass der Fahrzeugunterboden 19 am Heck des Fahrzeuges nach oben gebogen und eventuell mit senkrechten aerodynamischen Luftleitblechen zur Seite hin abgeschirmt ist, entsteht für die Luft, die unter dem Fahrzeug entlang strömt, ein Diffusor 21, welcher die Abtriebswirkung im restlichen Bereich des Fahrzeugunterbodens 19 erhöht. Zusätzliche Abtriebskräfte können durch gezielte Positionierung der Austrittsöffnung 12a des Austrittsströmungsweges 12 generiert werden.

Fig. 6 zeigt dazu eine Anordnung, bei der die Austrittsöffnung 12a unterhalb des - in Fahrtrichtung gesehen - vorderen Bereiches 22a des Heckflügels 22 angeordnet ist. Eine Abtriebserhöhung kann auch erreicht werden, wenn die Austrittsöffnung 12a im Bereich des Staupunktes des Diffusors 21 (Fig. 7) oder innerhalb des Diffusors 21, beispielsweise im Anfangsbereich des Diffusors 21 (Fig. 8) oder in einem zentralen Bereich des Diffusors 21 (Fig. 9) angeordnet wird.

Insbesondere für die Erhöhung des Abtriebs des Fahrzeuges lässt sich die Kombination aus erstem Verdichter 9 und erster Turbine 10, insbesondere Heißluftturbine 10a, mit besonderem Vorteil einsetzen, da die Heißluftturbine 10a nur sehr träge auf Drehzahl - und Laständerungen der Brennkraftmaschine 2 reagiert. Während ein in konventioneller Weise durch die Abgasströmung induzierter Abtrieb stark von der Motordrehzahl abhängig ist, kann der durch die Heißluftturbine 10a gestützte Abtrieb auch bei plötzlichen Drehzahlverminderungen der Brennkraftmaschine 2, insbesondere in Kurvenfahrten aufrecht erhalten werden. Dies verbessert wesentlich die Straßenlage und die Fahrsicherheit des Fahrzeuges.

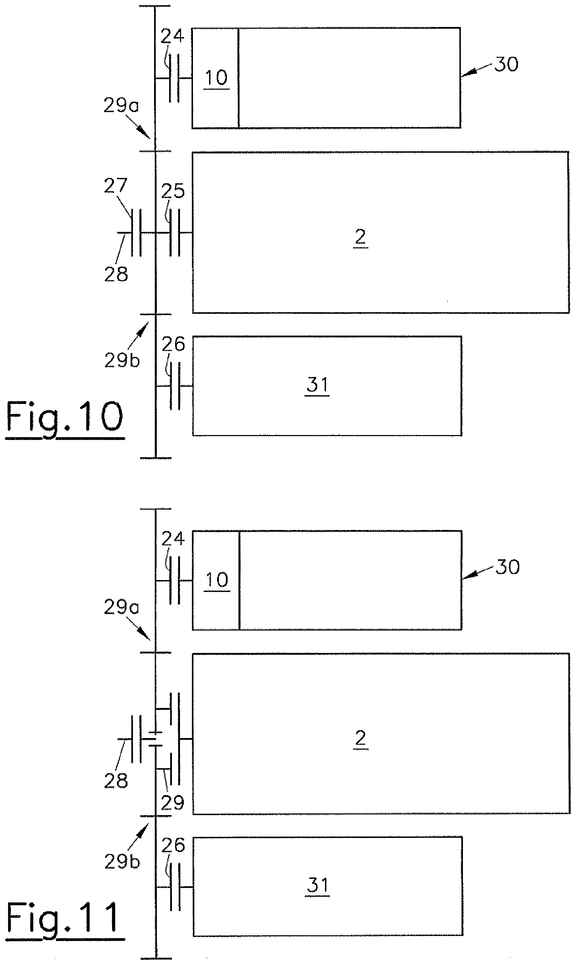

Die Einrichtung 30 zur Rückgewinnung von Wärmeenergie aus dem Abgas kann weiters zum Antrieb des Fahrzeuges im Antriebsstrang parallel zur Brennkraftmaschine 2 und parallel zur einer elektrischen Antriebsmaschine 31 angeordnet sein, wie in den Fig. 10 und Fig. 11 dargestellt ist. Dabei wirken die erste Turbine 10 - insbesondere die Heißluftturbine 10a - der Einrichtung 30, die Brennkraftmaschine 2 und die elektrische Antriebsmaschine 31 über eine oder mehrere Kupplungen 24, 25, 26, 27 und/oder über Übersetzungs- und/oder Planetengetriebe 29, 29a, 29b auf eine Antriebswelle 28 ein.

## Patentansprüche

1. Fahrzeug, insbesondere Rennfahrzeug, mit einer eine Brennkraftmaschine aufweisenden Antriebseinheit (1), und zumindest einer eine abtriebserhöhende Einrichtung (32) aufweisenden um- oder durchströmten Einrichtung, **dadurch gekennzeichnet, dass** die zumindest eine um- oder durchströmte Einrichtung im Ansaugströmungsweg (11) und/oder Austrittsströmungsweg (12) eines vorzugsweise durch eine erste Turbine (10) antreibbaren ersten Verdichters (9) angeordnet ist, und dass zumindest eine Austrittsöffnung (12a) des Austrittsströmungsweges (12) des ersten Verdichters (9) und/oder der ersten Turbine (10) im Bereich der abtriebserhöhenden Einrichtung (32) des Fahrzeuges so angeordnet ist, dass die Wirkung der abtriebserhöhenden Einrichtung (32) gesteigert werden kann.

2. Fahrzeug nach Anspruch 1, **dadurch gekennzeichnet, dass** die Antriebseinheit (1) eine Vorrichtung (30) zur Rückgewinnung von Wärme aus einem wärmeabgebenden Bauteil oder einer Wärme abgebenden Baugruppe, aufweist, wobei der Bauteil oder die Baugruppe an zumindest einen durchströmten Raum (6) grenzt, insbesondere zumindest teilweise von dem durchströmten Raum (6) umgeben ist, und wobei vorzugsweise der Wärme abgebenden Bauteil oder die Wärme abgebenden Baugruppe durch das Auslasssystem (4) der Brennkraftmaschine (2) gebildet ist.

3. Fahrzeug nach Anspruch 2, **dadurch gekennzeichnet, dass** zumindest ein Eintrittsbereich (7) des durchströmten Raumes (6) mit der Druckseite (D) des ersten Verdichters (9) strömungsverbunden ist.

4. Fahrzeug nach einem der Ansprüche 1 bis 3, **dadurch gekennzeichnet, dass** die erste Turbine (10) durch eine Heißluftturbine (10a) gebildet ist wobei zumindest ein Austrittsbereich (8) des durchströmten Raumes (6) mit der Heißluftturbine (10a) strömungsverbunden ist.

5. Fahrzeug nach einem der Ansprüche 1 bis 4, **dadurch gekennzeichnet, dass** die erste Turbine (10) eine im Auslasssystem (4) der Brennkraftmaschine (2) angeordnete Abgasturbine ist.

6. Fahrzeug nach einem der Ansprüche 1 bis 5, **dadurch gekennzeichnet, dass** der erste Verdichter (9) mit der ersten Turbine (10), vorzugsweise über eine gemeinsame Welle (13), antriebsverbunden ist, wobei vorzugsweise der erste Verdichter (9) und/oder die erste Turbine (10), besonders vorzugsweise über eine gemeinsame Welle (13), mit einer elektrischen Maschine (14) antriebsverbunden ist.

7. Fahrzeug nach einem der Ansprüche 1 bis 6, **dadurch gekennzeichnet, dass** der durchströmter Raum (6) ein Mantelraum ist, welcher den Bauteil oder die Baugruppe zumindest teilweise, vorzugsweise überwiegend, umgibt.

8. Fahrzeug nach einem der Ansprüche 1 bis 7, wobei der Bauteil oder die Baugruppe durch ein Auslasssystem (4) gebildet ist, **dadurch gekennzeichnet, dass** das Auslasssystem (4) zumindest einen von mindestens einem durchströmten Raum (6) umgebenen Abgaskrümmer (4a) und/oder zumindest einen von mindestens einem durchströmten Raum (6) umgebenen Abgaskanal im Zylinderkopf der Brennkraftmaschine (2) aufweist.

9. Fahrzeug nach einem der Ansprüche 1 bis 8, **dadurch gekennzeichnet, dass** der durchströmte Raum (6) Teil eines Wärmetauschers ist.

10. Fahrzeug nach einem der Ansprüche 1 bis 9, **dadurch gekennzeichnet, dass** zwischen dem Auslasssystem (4) und dem Raum (6) zumindest eine Strömungsverbindung (6a) angeordnet ist, wobei vorzugsweise die Strömungsverbindung (6a) stromaufwärts einer im Auslasssystem (4) der Brennkraftmaschine (2) angeordneten zweiten Turbine (5a) eines Abgasturboladers (5) angeordnet ist.

11. Fahrzeug nach Anspruch 10, **dadurch gekennzeichnet, dass** in der Strömungsverbindung (6a) zumindest ein vorzugsweise steuerbares Ventil (6b) angeordnet ist.

## Claims

1. A vehicle, especially a racing vehicle, comprising a drive unit (1) having an internal combustion engine, and at least one device around which or through which air flows and which comprises an output-increasing device (32), **characterised in that** the at least one device around which or through which air flows is arranged in the intake flow path (11) and/or outlet flow path (12) of a first compressor (9) which can preferably be driven by a first turbine (10), and that at least one outlet opening (12a) of the outlet flow path (12) of the first compressor (9) and/or the first turbine (10) is arranged in the region of the output-increasing device (32) of the vehicle in such a way that the effect of the output-increasing device (32) can be increased.

2. A vehicle according to claim 1, **characterised in that** the drive unit (1) comprises an apparatus (30) for reclaiming heat from a heat-emitting component or a heat-emitting assembly, wherein the component or the assembly adjoins at least one space (6) through which air flows, and is especially at least partly surrounded by the space (6) through which air flows, and wherein preferably the heat-emitting component or the heat-emitting assembly is formed by the exhaust system (4) of the internal combustion engine (2).

3. A vehicle according to claim 2, **characterised in that** at least one inlet region (7) of the space (6) through which air flows is flow-connected to the pressure side (D) of the first compressor (9).

4. A vehicle according to one of the claims 1 to 3, **characterised in that** the first turbine (10) is formed by a hot-air turbine (10a), wherein at least one outlet region (8) of the space (6) through which air flows is flow-connected to the hot-air turbine (10a).

5. A vehicle according to one of the claims 1 to 4, **characterised in that** the first turbine (10) is an exhaust-gas turbine arranged in the exhaust system (4) of the internal combustion engine (2).

6. A vehicle according to one of the claims 1 to 5, **characterised in that** the first compressor (9) is drive-connected to the first turbine (10), preferably via a common shaft (13), wherein preferably the first compressor (9) and/or the first turbine (10) is drive-connected to an electrical machine (14), more preferably via a common shaft (13).

7. A vehicle according to one of the claims 1 to 6, **characterised in that** the space (6) through which air flows is a jacket space which surrounds the component or the assembly at least partly, preferably mostly.

8. A vehicle according to one of the claims 1 to 7, wherein the component or the assembly is formed by an exhaust system (4), **characterised in that** the exhaust system (4) comprises at least one exhaust manifold (4a), which is surrounded by at least one space (6) through which air flows, and/or at least one exhaust duct, which is surrounded by at least one space (6) through which air flows, in the cylinder head of the internal combustion engine (2).

9. A vehicle according to one of the claims 1 to 8, **characterised in that** the space (6) through which air flows is part of a heat exchanger.

10. A vehicle according to one of the claims 1 to 9, **characterised in that** at least one flow connection (6a) is arranged between the exhaust system (4) and the space (6), wherein preferably the flow connection (6a) is arranged upstream of a second turbine (5a) of an exhaust gas turbocharger (5) arranged in the exhaust system (4) of the internal combustion engine (2).

11. A vehicle according to claim 10, **characterised in that** at least one preferably controllable valve (6b) is arranged in the flow connection (6a).

## Revendications

1. Véhicule, en particulier véhicule de course comprenant une unité d'entraînement (1) équipée d'un moteur à combustion interne et au moins un dispositif entouré ou traversé par le flux équipé d'un dispositif (32) intensifiant la sortie,
**caractérisé en ce que**
le dispositif entouré ou traversé par le flux est monté dans le trajet du flux d'entrée (11) et/ou dans le trajet du flux de sortie (12) d'un premier compresseur (9) de préférence actionné par une première turbine (10) et au moins une ouverture de sortie (12a) du trajet du flux de sortie (12) du premier compresseur (9) et/ou de la première turbine (10) est installée dans la zone du dispositif intensifiant la sortie (32) du véhicule de façon à permettre d'augmenter l'action du dispositif intensifiant la sortie (32).

2. Véhicule conforme à la revendication 1,
**caractérisé en ce que**
l'unité d'entraînement (1) comporte un dispositif (30) permettant de récupérer la chaleur provenant d'un composant dégageant de la chaleur ou d'un ensemble dégageant de la chaleur, cet élément ou ensemble délimitant au moins une chambre traversée par le flux (6), en particulier étant entourée au moins partiellement par la chambre traversée par le flux (6), et, de préférence, l'élément dégageant de la chaleur ou l'ensemble dégageant de la chaleur étant formé par le système d'échappement (4) du moteur à combustion interne (2).

3. Véhicule conforme à la revendication 2,
**caractérisé en ce qu'**
au moins une zone d'entrée (7) de la chambre traversée par le flux (6) est en liaison fluidique avec le côté pression (D) du premier compresseur (9).

4. Véhicule conforme à l'une des revendications 1 à 3,
**caractérisé en ce que**
la première turbine (10) est formée par une turbine à air chaud (10a), et au moins la zone de sortie (8) de la chambre traversée par le flux (6) est en liaison fluidique avec la turbine à air chaud (10a).

5. Véhicule conforme à l'une des revendications 1 à 4,
**caractérisé en ce que**
la première turbine (10) est une turbine de gaz d'échappement montée dans le système d'échappement (4) du moteur à combustion interne (2).

6. Véhicule conforme à l'une des revendications 1 à 5,
**caractérisé en ce que**
le premier compresseur (9) est relié en entraînement avec la première turbine (10), de préférence par un arbre commun (13), et de préférence le premier compresseur (9) et/ou la première turbine (10), sont de façon particulièrement préférentielle, reliées en entraînement par l'intermédiaire d'un arbre commun (13) avec un moteur électrique (14).

7. Véhicule conforme à l'une des revendications 1 à 6,
**caractérisé en ce que**
la chambre traversée par le flux (6) est une chambre enveloppe qui entoure l'élément ou l'ensemble au moins partiellement et de préférence de façon prépondérante.

8. Véhicule conforme à l'une des revendications 1 à 7,
dans lequel l'élément ou l'ensemble est formé par un système d'échappement (4),
**caractérisé en ce que**
le système d'échappement (4) comprend au moins un collecteur de gaz d'échappement (4a) entouré par au moins une chambre traversée par le flux (6) et/ou au moins un canal de gaz d'échappement entouré par au moins une chambre traversée par le flux (6) dans la culasse du moteur à combustion interne (2).

9. Véhicule conforme à l'une des revendications 1 à 8,
**caractérisé en ce que**
la chambre traversée par le flux (6) est une partie d'un échangeur de chaleur.

10. Véhicule conforme à l'une des revendications 1 à 9,
**caractérisé en ce qu'**
entre le système d'échappement (4) et la chambre (6) est installé au moins une liaison fluidique (6a), et de préférence la liaison fluidique (6a) est montée en amont d'une seconde turbine (5a) d'un turbo compresseur de gaz d'échappement (5) monté dans le système d'échappement (4) du moteur à combustion interne (2).

11. Véhicule conforme à la revendication 10,
**caractérisé en ce que**
dans la liaison fluidique (6a) est montée au moins une soupape (6b) de préférence commandable.
